# EUROPÄISCHE PATENTSCHRIFT

(11) **EP 2 249 070 B1**
(45) Veröffentlichungstag und Bekanntmachung des Hinweises auf die Patenterteilung: **07.12.2011**
(21) Anmeldenummer: 09006065.8
(22) Anmeldetag: 04.05.2009
(51) Int. Cl.: F16L 5/10

(54) **Leitungsdurchführung durch eine Gebäudewand**
Lead through duct for a building wall
Passage de conduit à travers un mur de bâtiment

(43) Veröffentlichungstag der Anmeldung: 10.11.2010
(73) Patentinhaber: Hauff-Technik GmbH & Co. KG, 89542 Herbrechtingen (DE)
(72) Erfinder: Scheuring, Horst, 89182 Bernstadt (DE)
(74) Vertreter: Szynka, Dirk

(56) Entgegenhaltungen:
- DE-A1- 4 014 684
- DE-A1- 10 358 965
- DE-C1- 19 919 171
- US-A- 5 551 414

## Beschreibung

Diese Erfindung betrifft die Befestigung einer Leitungsdurchführung in einer Durchlassöffnung einer Gebäudewand.

Überall dort, wo in Gebäuden Kabel und Rohre ein- oder ausgeführt werden müssen, ist eine Durchführung dieser Leitungen durch eine Durchlassöffnung in einer Gebäudewand notwendig. Dabei ist neben der mechanischen Befestigung der Leitung in der Gebäudewand vor allem die Abdichtung der Durchlassöffnung gegen den Durchtritt von Wasser oder anderen Flüssigkeiten herzustellen.

Konventionell erfolgt dies beispielsweise durch Vermörteln, wobei die Durchlassöffnung in der Gebäudewand mit der durchgeführten Leitung auf beiden Seiten der Gebäudewand verschalt und das die Leitung umgebende Volumen innerhalb der Durchlassöffnung mit einem Mörtel gefüllt wird. Aufgrund der dafür notwendigen Verschalung und der langen Trocknungszeiten der Mörtel ist dieses Verfahren relativ aufwändig. Ein weiterer Nachteil liegt im Schrumpfen des Mörtels beim Trockenprozess.

Darüber hinaus gibt es verschiedenste Bauformen von Leitungsdurchführungen mit Spanneinrichtungen und Elastomeren, die in eine Durchlassöffnung in einer Gebäudewand eingesetzt und darin verspannt werden, um eine Befestigung und Abdichtung zu erzielen.

Oft werden Leitungsdurchführungen im Kellerbereich eingesetzt und sind daher vorzugsweise während des Baus und vor dem Verfüllen der Baugrube oder im oberen Bereich der Höhe des Kellergeschosses anzubringen. Die US 5,551,414 zeigt eine Leitungsdurchführung gemäβ dem Oberbegriff des Anspruchs 1, nämlich eine in einer Mauer mit einem Füllmaterial befestigte Durchführung für eine kombinierte Luft/Abgasleitung einer Gasheizung. Dabei sind die Merkmale des Oberbegriffs dargestellt. Insbesondere wird ein Rohrstück mit einem gummielastischen Stöpsel durch die Wandöffnung hindurchgeschoben, woraufhin sich der Stöpsel auf der anderen Seite radial aufklappt und beim Zurückziehen an die Wand anlegt. Zwischen dem Außenmantel der Leitungsdurchführung und die Wandöffnung wird ein Füllmaterial eingebracht.

Der vorliegenden Erfindung liegt auf dieser Grundlage das Problem zugrunde, die Gebrauchseigenschaften von Leitungsdurchführungen nach dem Oberbegriff zu erweitern.

Das Problem wird gelöst durch eine Leitungsdurchführung für eine Gebäudewand mit einer Dichtscheibe, die zum Durchführen durch eine Durchlassöffnung in der Gebäudewand in ihren Außenmaßen senkrecht zur Durchführungsrichtung verringert werden kann und danach zur dichtenden Anlage an einer hinsichtlich des Durchführens distalen Seite der Gebäudewand vergrößert werden kann, und einer Einrichtung zum Durchführen der Dichtscheibe durch die Durchlassöffnung in der Gebäudewand von einer proximalen zu einer distalen Seite, wobei eine Durchführungshülse vorgesehen ist, die einen Mantel aufweist und dazu ausgelegt ist, die Leitung zu umgeben, und proximal von der Dichtscheibe und innerhalb der Durchlassöffnung in der Gebäudewand angeordnet zu werden, dadurch gekennzeichnet, dass die Durchführungshülse ferner dazu ausgelegt ist, durch Einfüllen einer fließfähigen und nach Einfüllen aushärtenden Füllsubstanz in das Innere der Durchführungshülse in der Durchlassöffnung befestigt zu werden, und der Mantel aus einem Elastomermaterial besteht und dazu ausgelegt ist, von der Füllsubstanz unter Druck gesetzt und dadurch expandiert zu werden und/oder der Mantel dazu ausgelegt ist, dass die Füllsubstanz durch die Wand des Mantels hindurch austritt.

Weiterhin richtet sich die Erfindung auf Verfahren zum Befestigen einer solchen Leitungsdurchführung, auf eine entsprechende Verwendung der Leitungsdurchführung und auf verschiedene in den abhängigen Ansprüchen angegebene Ausgestaltungen, die im Folgenden in weiteren Einzelheiten dargestellt werden. Zwischen der Verfahrenskategorie, der Vorrichtungskategorie und der Verwendungskategorie der Erfindung wird dabei nicht explizit unterschieden; vielmehr sind die einzelnen Merkmale grundsätzlich im Hinblick auf alle Anspruchskategorien zu verstehen.

Die Erfindung geht von folgenden Überlegungen aus: Einerseits sind zur Herstellung einer wirklich dauerhaften und befriedigenden Dichtigkeit bei vielen Anwendungen Dichtelemente gewünscht, die nicht (nur) innerhalb einer Durchlassöffnung in der betroffenen Gebäudewand abdichten, sondern eine dichtende Anlage auf einer an die Durchlassöffnung angrenzenden Fläche der Gebäudewand bilden. Ein solches Dichtelement wird im Folgenden Dichtscheibe genannt, wobei dieser Begriff nicht zwingend eine kreisrunde Form impliziert, wenngleich diese bevorzugt ist.

Andererseits sind Leitungsdurchführungen immer wieder in Situationen anzubringen, in denen der Zugang zu der Gebäudewandöffnung von einer Seite versperrt oder jedenfalls deutlich behindert ist. Dies betrifft insbesondere bereits im Erdreich vergrabene Kellerwände, in denen nachträglich eine Leitungsdurchführung angebracht werden soll. Es können aber auch andere Situationen betroffen sein, etwa mit einem durch äußere Gebäude oder Maschinenelemente stark behinderten Zugang zu der Gebäudewandöffnung.

Schließlich sind die erwähnten Dichtscheiben oft gerade an der Seite mit dem eingeschränkten Zugang gewünscht, also insbesondere an der Außenseite, weil die von außen anstehende Feuchtigkeit oder andere Medien gar nicht erst in die Wandöffnung eindringen sollen. Möglicherweise sind auch Dichtscheiben auf beiden Seiten gewünscht, sodass jedenfalls eine auf der unzugänglichen Seite angebracht werden muss.

Hierfür schlägt die Erfindung eine Leitungsdurchführung mit einer solchen Dichtscheibe vor, die hinsichtlich ihrer Außenmaße, bei einer kreisrunden Geometrie also hinsichtlich ihres Außendurchmessers senkrecht zur Leitungsrichtung bzw. Durchführungsrichtung, verringert werden kann, gewissermaßen also schmaler oder dünner gemacht werden kann. Damit kann die Dichtscheibe von der besser zugänglichen Seite, die im Folgenden als proximale Seite bezeichnet wird, aus durch die Gebäudewandöffnung durchgeführt werden. Eine dazu geeignete Einrichtung kann eine Stange, ein Element einer Spanneinrichtung oder, bevorzugt, ein Leitungsstück oder ein Rohrstück zur Aufnahme eines durchzuführenden Leitungsstücks selbst sein. Vorzugsweise umgibt die Dichtscheibe das Leitungs- oder Rohrstück dabei.

Außerhalb der Durchlassöffnung wird dann der vergrößerte Durchmesser oder werden die vergrößerten Außenmaße wiederhergestellt, sodass die Dichtscheibe dort wie gewünscht auf die Gebäudewand gelegt werden kann, also zumindest teilweise, vorzugsweise entlang dem gesamten Umfang, die Mündung der Gebäudewandöffnung überragt.

Eine günstige Möglichkeit zur Realisierung der Außenmaßveränderung besteht in einer Änderung eines Winkels zwischen der Durchführungsrichtung und der Dichtscheibe, d. h. genauer ihrem Profil in einem Schnitt entlang der Durchführungsrichtung. Dabei wird die Dichtscheibe mehr oder weniger konisch, bewegt sich also ähnlich wie ein Schirm beim Aufspannen und Zusammenfalten. Dies betrifft allerdings nicht zwingend das bei Schirmen übliche Entstehen von überschüssigem Material und entsprechenden Falten zwischen den Speichen. Vielmehr ist bei dieser Erfindung ein Dichtscheibenmaterial bevorzugt, das entsprechend formflexibel ist, also weitgehend faltenfrei etwas (bei einer rotationssymmetrischen Geometrie radial) zusammengedrückt werden kann.

In diesem Zusammenhang, aber auch bei denkbaren anderen Geometrien, sind elastische Rückstellkräfte der Dichtscheibe bevorzugt, die die Außenmaßvergrößerung auf der distalen Seite selbsttätig wiederherstellen und zur Außenmaßverringerung überwunden werden müssen. Diese Rückstellkräfte können insbesondere aus einer Kompression des erwähnten formflexiblen Materials folgen. das also nicht nur formflexibel, sondern auch komprimierbar ist.

Allerdings sind auch Ausführungsvarianten denkbar, die lediglich formflexibles Material verwenden, so wie eine Schirmbespannung lediglich formflexibel, aber weder komprimierbar noch dehnbar ist. In solchen Fällen werden bei der Außenmaßverringerung Falten entstehen. Es können Streben, Speichen oder ähnliche Stützelemente eingesetzt werden, die ihrerseits elastische Rückstellkräfte zur Verfügung stellen können oder elastisch abgestützt sind oder auch durch Bewegungsmechanismen betätigt werden.

Bevorzugt ist allerdings eine einfache Schirmgeometrie aus formflexiblem und komprimierbarem (im Sinne von flächenflexiblem) Material, die von einem Leitungsstück oder Rohrstück zur Aufnahme eines Leitungsstücks durchsetzt ist oder werden kann.

Hierbei und auch unabhängig von der erwähnten Schirmgeometrie weist das Kanalstück vorzugsweise einen zusätzlichen Dichteinsatz in seinem Inneren auf, der hinsichtlich der Position in Leitungsrichtung ungefähr bei der Dichtscheibe oder etwas distal davon eine Abdichtung zwischen Kanalstück und Leitungsstück herstellt. Im einfachsten Fall kann das Leitungsstück hierbei einfach durchgesteckt werden, wozu auf das Ausführungsbeispiel verwiesen wird.

Erfindungsgemäß wird zusätzlich eine Durchführungshülse vorgeschlagen, die die Leitungsdurchführung umschließt bzw. umschließen soll. In das Innere der Hülse wird bei der Montage eine fließfähige Füllsubstanz eingebracht, durch die die Hülse nach Einführen in die Durchlassöffnung der Gebäudewand senkrecht zur Durchführungsrichtung unter Druck gesetzt oder sogar expandiert werden kann. Je nach Ausgestaltung kann die Durchführungshülse dabei bis auf das Maß der Querschnittsfläche der Durchlassöffnung expandieren, sodass die Durchführungshülse in der Durchlassöffnung verpresst wird. Die Befestigung der Durchführungshülse innerhalb der Durchlassöffnung erfolgt dabei durch Haftreibung und/oder Formschluss. Dabei härtet die Füllsubstanz, ob nun expandierend oder nicht, in der Durchführungshülse aus, sodass die Befestigungswirkung dauerhaft erhalten bleibt.

Die Durchführungshülse stellt ein Volumen zur Aufnahme der Füllsubstanz dar, welche vorzugsweise (etwa durch eine chemische Reaktion) ihr Volumen vergrößert, um den notwendigen Druck zur Expansion der Durchführungshülse aufzubauen. Die Füllsubstanz als (vorzugsweise) expandierendes Material, das vor dem Aushärten sein Volumen vergrößert, kann ein Zweikomponentenmaterial sein, das unter Schaumbildung expandiert, beispielsweise ein PU(PUR/PIR)-Material.

Im Prinzip können aber auch nicht expandierende Materialien unter Druck eingefüllt werden und im eingefüllten Zustand aushärten. Schließlich sind auch Durchführungshülsen denkbar, die mit nicht aushärtenden Materialien gefüllt und unter Druck gehalten werden, insbesondere durch dichten Verschluss. Dabei kann dieser Druck der Hülse auch über eine externe Vorrichtung, beispielsweise eine Pumpe oder Presse, oder einfach durch manuelle Betätigung der Befüllvorrichtung zugeführt werden.

Die erfindungsgemäße Durchführungshülse besitzt vorzugsweise Abschlussstücke und einen Mantel aus flexiblem Material, der die Abschlussstücke verbindet und die Leitungsdurchführung umschließt, wobei eines der Abschlussstücke die Dichtscheibe sein kann. Prinzipiell sind auch Ausführungsformen inbegriffen, bei denen die Abschlussstücke und der Mantel einstückig hergestellt sind.

Dabei besitzen die Abschlussstücke jeweils eine Öffnung, sodass die Leitungsdurchführung durch die Hülse geführt sein oder werden kann. Es kann sowohl die Leitungsdurchführung fest mit der Hülse verbunden sein, als auch die Leitungsdurchführung erst bei der Verwendung der Durchführungshülse durch diese durchgeführt und mit einer geeigneten Haltevorrichtung befestigt werden.

Hier zeigt sich in besonderem Maße der Vorteil der Erfindung, da die Ausgangssubstanzen von Zweikomponentenmaterialien eine niedrige Viskosität besitzen können und diese und das unter Umständen anfänglich ebenfalls relativ flüssige Reaktionsprodukt von der Hülse insbesondere für die Dauer der chemischen Reaktion am gewünschten Ort innerhalb der Durchlassöffnung gehalten werden. Diese Funktionsweise der Durchführungshülse ist in besonderem Maß bei porösem Mauerwerk oder bei einem Wandaufbau mit eingeschlossenen Hohlräumen wichtig.

Vorzugsweise erfolgt die Injektion des Zweikomponentenmaterials durch eine weitere Öffnung eines vorzugsweise proximalen Abschlussstückes, nämlich eine sogenannte Injektionsöffnung. Dabei kann die Injektionsöffnung für die Aufnahme einer Spritzdüse bzw. Kanüle einer handelsüblichen Kartusche ausgelegt sein. Weiterhin muss sie so gestaltet sein, dass durch die injizierte Füllsubstanz ein Druckaufbau im Inneren der Durchführungshülse möglich ist.

Neben der Injektion der expansionsfähigen Füllsubstanz ist es ebenfalls möglich, dass die Komponenten der Füllsubstanz getrennt voneinander bereits in der Durchführungshülse enthalten sind und diese erst nach Einführen der Durchführungshülse in die Durchlassöffnung in Kontakt gebracht werden, um die die Expansion verursachende chemische Reaktion in Gang zu setzen.

Erfindungsgemäß ist als Material für den Mantel der Hülse ein Elastomer vorzuziehen, welches aufgrund seiner elastischen Eigenschaften eine kontrollierte Expansion der Durchführungshülse bei einem bestimmten Druck erlaubt. Die zunehmende Dehnung des Mantels bei einem steigenden Druck im Inneren der Hülse führt zu der gewünschten Verpressung in der Durchlassöffnung. Aufgrund der elastischen Dehnung des Mantels passt sich dieser an die Topographie der Innenfläche der Durchfassöffnung an und bewirkt so einen Formschluss zwischen der Innenfläche und der Durchführungshülse. Dabei werden Risse oder Hohlräume innerhalb der Gebäudewand durch den Mantel überbrückt und eine Minderung der Befestigungswirkung der Durchführungshülse aufgrund einer übermäßigen Expansion der Füllsubstanz in diese Hohlräume vermieden.

Vorzugsweise besitzt der flexible Mantel eine Durchlässigkeit für die Füllsubstanz ab einem bestimmten Druckschwellenwert. Der Druckschwellenwert liegt dabei in einem Bereich, dessen untere Grenze zunehmend bevorzugt bei 5, 8, 11, 14 oder 16 mbar und dessen obere Grenze zunehmend bevorzugt bei 50, 40, 30, 25 oder 20 mbar liegt. Dadurch wird erreicht, dass bei der Expansion der Füllsubstanz die Durchführungshülse in einer ersten Phase vollständig gefüllt wird, dann in einer zweiten Phase die Expansion der Durchführungshülse senkrecht zur Durchführungsrichtung durch die Dehnung des flexiblen Mantels aufgrund des sich in der Durchführungshülse aufbauenden Druckes erfolgt und erst ab dem bestimmten Druckschwellenwert in einer dritten Phase die weiter expandierende Füllsubstanz durch den Mantel der Durchführungshülse aus dieser austritt.

Das Austreten der Füllsubstanz ab einem bestimmten Druckschwellenwert durch den Mantel kann beispielsweise durch eine Perforation des Mantels erzielt werden, wobei sich die Perforationsöffnungen durch die Dehnung des Mantels bei der Expansion der Durchführungshülse öffnen und so den Austritt der Füllsubstanz gewährleisten. Daneben sind ebenso Mechanismen zum Austritt der Füllsubstanz durch den Mantel denkbar, die auf der Zerstörung, beispielsweise einem Zerreißen oder einem Auflösen, von Bestandteilen des Mantels durch die Füllsubstanz basieren.

Wie zuvor dargestellt, erfolgt durch die Expansion der Durchführungshülse eine Verpressung, wodurch die Leitungsdurchführung in der Durchlassöffnung in der Wand befestigt wird. Darüber hinaus kann durch diese Verpressung bei geeigneter Oberflächenbeschaffenheit im Inneren der Durchlassöffnung eine Abdichtung der Durchlassöffnung durch die Durchführungshülse erfolgen. Diese Abdichtwirkung wird gegebenenfalls besonders bei rauen oder porösen Oberflächen bzw. bei einem Wandaufbau mit Lufteinschlüssen durch die ab einem bestimmten Druckschwellenwert aus dem Mantel austretende Füllsubstanz deutlich verbessert.

In Verbindung mit der erfindungsgemäßen Dichtscheibe kann im Prinzip die befestigende Wirkung der Durchführungshülse im Inneren der Durchlassöffnung genügen, wenngleich eine zusätzliche Dichtwirkung der Durchführungshülse natürlich nur von Vorteil sein kann. Zusätzlich zur Befestigung der Leitungsdurchführung kann die Durchführungshülse den für die Abdichtung auf der äußeren Wandfläche notwendigen Anpressdruck der Dichtscheibe gewährleisten.

Erfindungsgemäß sind hierbei mehrere Ausführungen möglich: Die Dichtscheibe kann, wie bereits erwähnt, mit einem Abschlussstück zusammenfallen. Dabei kann ein Teil dieses Bauteils als "Abschlussstück" in die Durchlassöffnung hineinragen und ein anderer Teil desselben Bauteils als "Dichtscheibe" davor liegen. Die Funktion des Abschlussstücks kann aber auch allein durch ein außerhalb der Durchlassöffnung anliegendes größeres Teil gewährleistet werden. Andererseits kann die Dichtscheibe ein zusätzliches Bauteil zu dem zweiten Abschlussstück bilden. Dichtscheibe und Abschlussstück können also zusammenfallen, müssen das aber nicht.

Die Dichtscheibe kann insbesondere mit einer Haltevorrichtung oder in ihrer Ausgestaltung als die Durchführungshülse abschließendes Abschlussstück mit der Durchführungshülse verbunden sein und temporär mit einer Spannvorrichtung an die zu dichtende Wandfläche gepresst werden, bis die Füllsubstanz in der Durchführungshülse für eine Fixierung gesorgt hat und somit den notwendigen Anpressdruck für die Abdichtung aufrechthält.

Ein weiteres Merkmal der Erfindung liegt in der Möglichkeit, dass sich die beiden Enden der Durchführungshülse in Durchführungsrichtung relativ zueinander annähern, wenn die Durchführungshülse expandiert wird. Bei der Expansion der Durchführungshülse schließt ab einem gewissen Zeitpunkt der flexible Mantel mit der Innenfläche der Durchlassöffnung ab und stellt so eine mechanisch feste Verbindung der Hülse mit der Gebäudewand her. Bei weiterer Expansion der Durchführungshülse vergrößert sich diese Kontaktfläche zwischen dem flexiblen Mantel und der Innenfläche der Durchlassöffnung und nähern sich die Abschlussstücke weiter an. Da jetzt die Durchführungshülse bereits fest in der Durchlassöffnung verankert ist, wird durch die weitere Annäherung der Abschlussstücke die notwendige Anpresskraft auf die Dichtscheibe zum Abdichten auf der Außenfläche der Wand aufgebaut. Das gilt analog, wenn die Dichtscheibe ein Abschlussstück ist.

Die Erfindung kann auch so eingesetzt werden, dass die Füllsubstanz im fließfähigen Zustand zumindest auf der distalen Seite, also bei der Dichtscheibe, etwas aus der Durchlassöffnung austritt. Sie kann dann die Dichtwirkung der Dichtscheibe verbessern, insbesondere indem sie sich im Bereich der dichtenden Anlage zwischen Dichtscheibe und Gebäudewand schiebt, Restundichtigkeiten beseitigt und vorzugsweise auch eine mechanische Verbindung zwischen Dichtscheibe und Gebäudewand herstellt oder diese verbessert. Dies gilt besonders bei dichtenden Beschichtungen der Gebäudewand, etwa einem Schwarzanstrich. Typischerweise kann der Überstand der Füllsubstanz im ausgehärteten Zustand in Leitungsrichtung in der Größenordnung von 0,1 mm - 10 mm liegen. Senkrecht dazu, also bei zylindrischen Geometrien radial, ist er deutlich größer, je nach Größe der Dichtscheibe.

Speziell für Anwendungen der Erfindung bei der Montage von Leitungsdurchführungen in Gebäudewänden, bei denen auf der distalen Seite Erdreich anliegt, kann eine Erdrakete sinnvoll eingesetzt werden. Diese kann durch die Durchlassöffnung in der Gebäudewand von der proximalen Seite aus durchgeführt werden und die Durchlassöffnung durch einen Kanal durch das Erdreich verlängern. Dabei kann die Erdrakete beispielsweise eine Rohr- oder Schlauchleitung hinter sich her ziehen, um diesen Kanal zu stabilisieren und die durchzuführende Leitung durch die Rohr- oder Schlauchleitung hindurchfädeln zu können. Auch dies ist im Ausführungsbeispiel beschrieben.

Im Folgenden wird die Erfindung anhand eines Ausführungsbeispiels näher erläutert, wobei die einzelnen Merkmale auch in anderen Kombinationen erfindungswesentlich sein können und sich, wie bereits erwähnt, implizit auf alle Kategorien der Erfindung beziehen.

Im Folgenden zeigt:
- Figur 1: zeigt eine schematische Schnittdarstellung einer Kellerwand mit einer Bohrung,
- Figur 2: zeigt die Kellerwand aus Figur 1 mit angesetzter Erdrakete,
- Figur 3: zeigt eine perspektivische Ansicht eines Hauses mit der Kellerwand aus den Figuren 1 und 2 und der daraus hervorgetriebenen Erdrakete,
- Figur 4: zeigt analog zu den Figuren 1 und 2 die Kellerwand mit einem Schutz- rohr und einer durchzuführenden Leitung darin,
- Figur 5: zeigt die Kellerwand mit einem Reinigungsinstrument,
- Figur 6: zeigt die Kellerwand mit einem Sauger,
- Figur 7: zeigt die Kellerwand mit der durchzuführenden Leitung und einer darauf aufgesetzten erfindungsgemäßen Leitungsdurchführung,
- Figur 8: zeigt eine perspektivische Ansicht eines aufgeschnittenen Teils der Lei- tungsdurchführung aus Figur 7,
- Figur 9: zeigt die Situation aus Figur 7, jedoch mit in die Bohrung eingesteckter Leitungsdurchführung,
- Figur 10: zeigt die Situation aus Figur 9 mit einer PU-Schaum-Dosierpistole,
- Figur 11: zeigt die Kellerwand aus den Figuren 1 - 10 mit fertig montierter Lei- tungsdurchführung und
- Figur 12: zeigt analog zu Figur 3 das Haus mit der Leitungsdurchführung in der Kellerwand und dem daran anschließenden Leitungsverlauf durch das Erdreich in dem Schutzrohr.

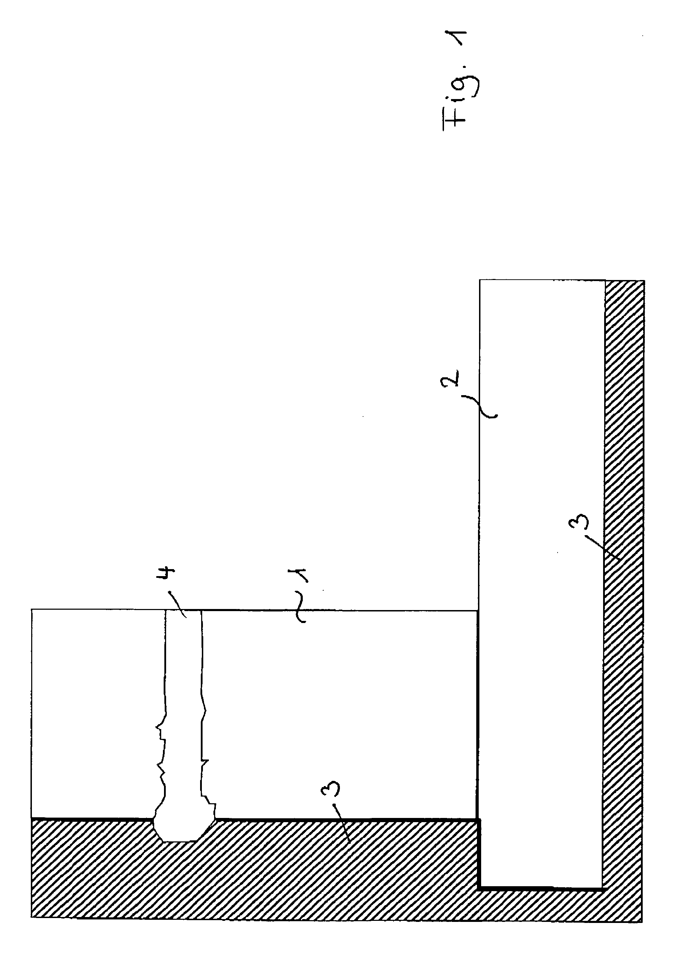

Figur 1 zeigt eine Kelleraußenwand 1 auf einem Gebäudefundament 2, die von Erdreich 3 in Figur 1 links davon und darunter umgeben sind. In die Kellerwand 1 ist mit einer an sich üblichen Bohrmaschine, die über ein Führungsgestell an der Kellerwand 1 befestigt wurde, eine Durchlassöffnung 4 gebohrt worden. Die Bohrung erfolgte von innen nach außen, sodass die Durchlassöffnung nach außen zunehmend unregelmäßig und im äußeren Bereich ausgebrochen ist, was in Figur 1 etwas übertrieben dargestellt ist.

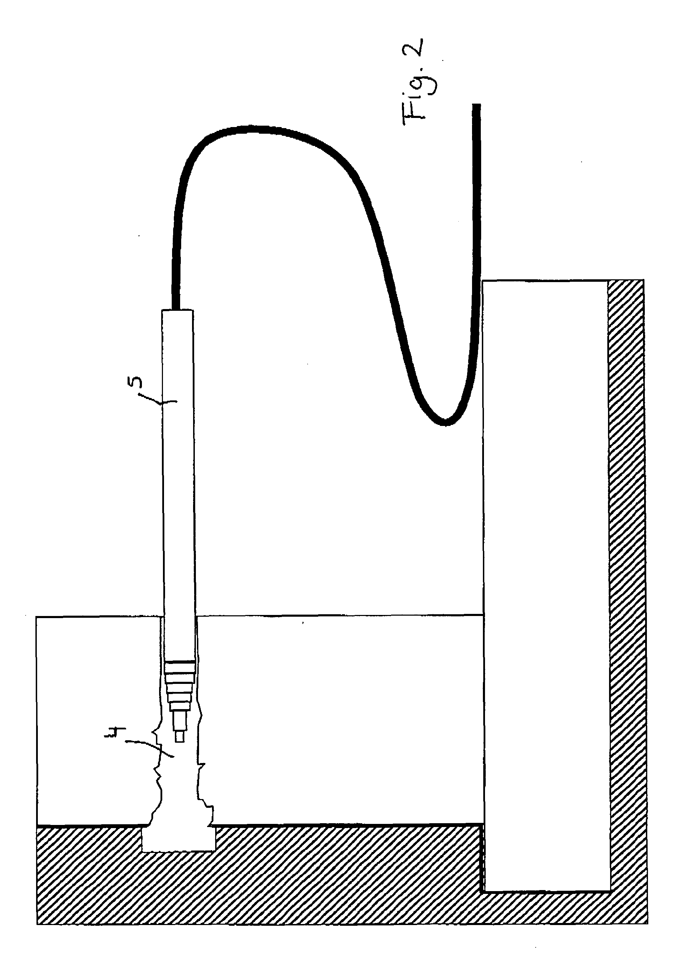

In Figur 2 ist eine Erdrakete, 5 in die Bohrung bzw. Durchlassöffnung 4 eingesetzt. Erdraketen sind an sich bekannt und dienen zur Herstellung von kleineren Kanälen durch Erdreich, um ein Aufgraben zu vermeiden. Die Erdrakete, 5 ist über die dargestellte Schlauchleitung mit Druckwasser angetrieben; an ihrem linken Ende ist der bewegliche Werkzeugkopf zur Herstellung des Kanals dargestellt.

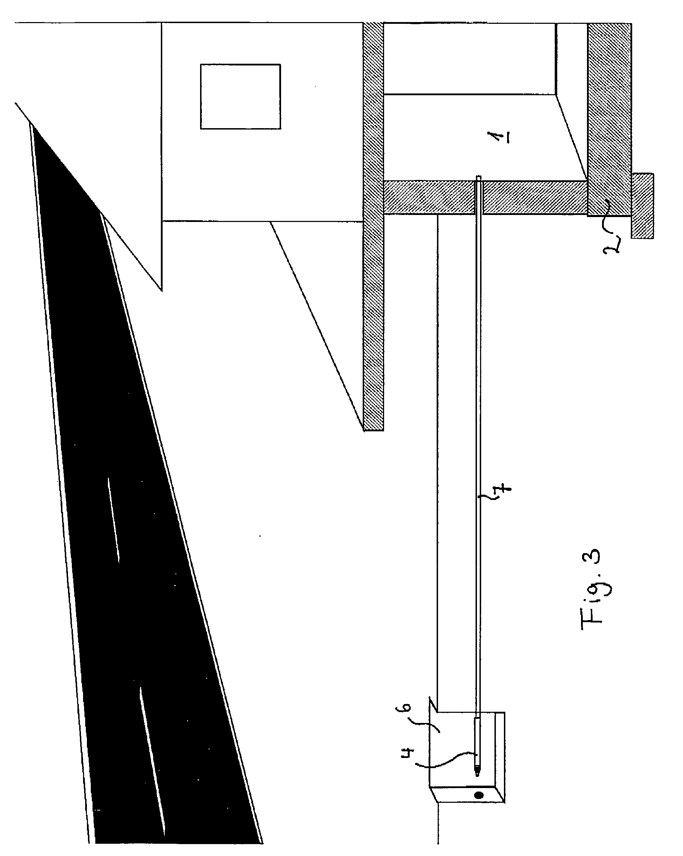

Figur 3 zeigt rechts unten die Kellerwand 1 auf dem Fundament 2 und darüber ein schematisch dargestelltes Haus mit Terrasse. Links hinten ist eine Straße angedeutet. Der Bereich zwischen der Terrasse und der Straße enthält eine Zielgrube 6, in der ein Anschluss an eine Telekommunikations-Versorgungsleitung vorgenommen werden soll. Dazu ist die Erdrakete 4 durch die Durchlassöffnung in der Kellerwand 1 und das daran angrenzende Erdreich horizontal vorgetrieben worden und hat dabei ein aus Segmenten zusammengebautes Schutzrohr 7 hinter sich her gezogen. Die Erdrakete 4 kann abgebaut werden, wobei das Schutzrohr 7 zunächst in dem Kanal verbleibt.

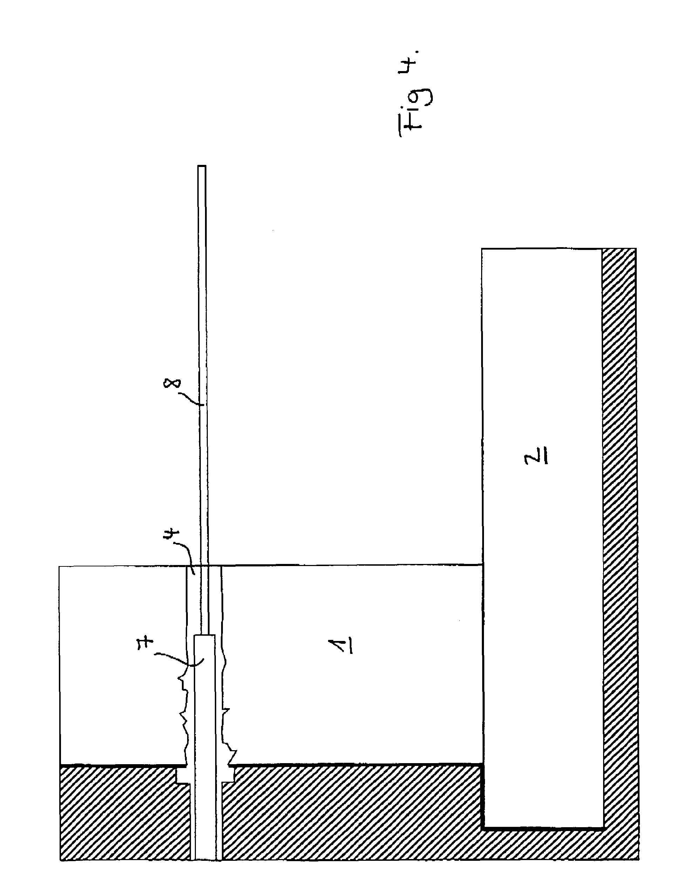

Figur 4 zeigt das rechte Ende des Schutzrohres 7 in der Durchlassöffnung 4 und zusätzlich die erfindungsgemäß durch die Kellerwand 1 durchzuführende Leitung 8, hier eine Glasfaserleitung zur Herstellung eines Telekommunikationsanschlusses für das Haus. Prinzipiell kann die Leitung 8 ebenso eine Strom-, Wasser-, Gas- oder Fernwärmeleitung sein. Die Glasfaserleitung 8 kann aus dem Keller heraus einfach durch das Schutzrohr 7 durchgeschoben werden, da dieses innenseitig einen sauber begrenzten und praktisch verschmutzungsfreien Kanal bildet und diesen gegen das Erdreich abstützt. Danach kann das Schutzrohr 7 stückweise aus dem Kanal herausgezogen und für andere Zwecke wieder verwertet werden.

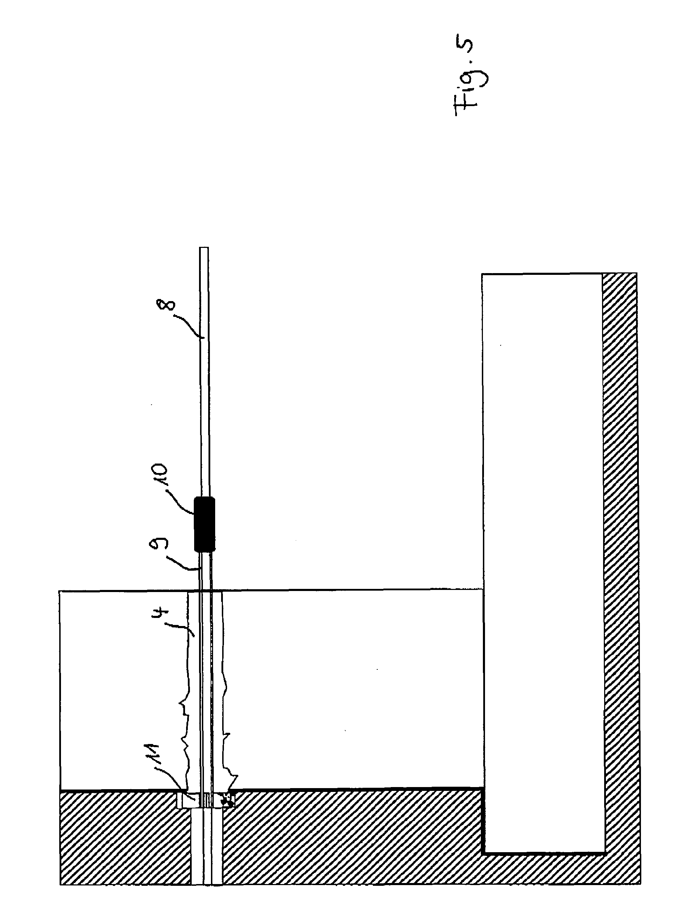

Figur 5 zeigt die Situation nach Entfernen des Schutzrohres 7. Hier wird ein rohrförmiges Reinigungsgerät 9 mit einem Handgriff 10 und einem bürstenähnlichen Reinigungskopf 11 über die Leitung 8 in die Durchlassöffnung 4 eingeschoben, um die distale Mündung der Durchlassöffnung 4 etwas zu reinigen und lose Wandstücke oder Erdreich zu entfernen oder zumindest zu lockern.

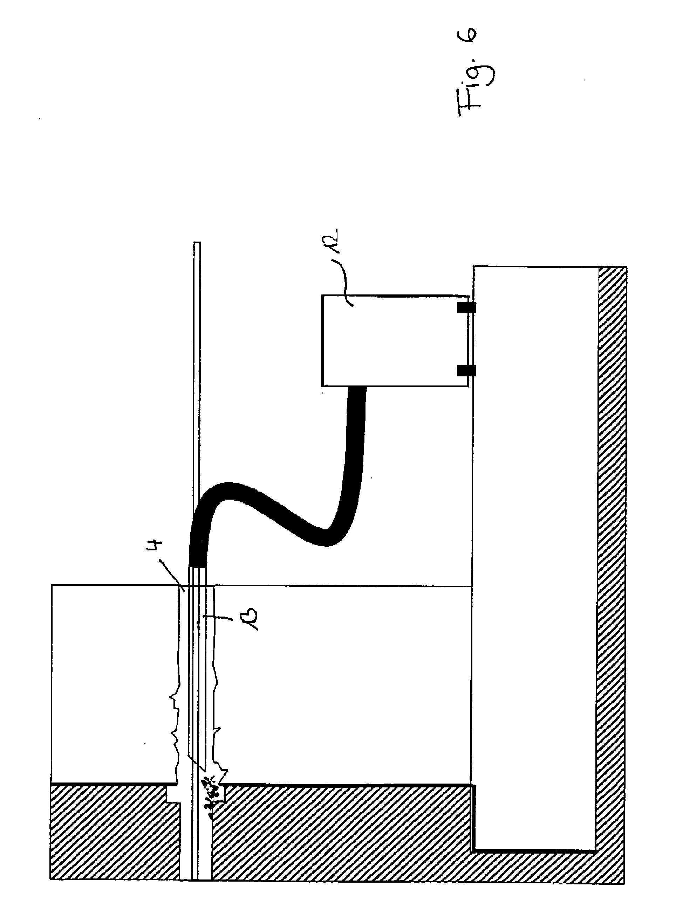

Figur 6 zeigt einen weiteren Reinigungsschritt mit einem Gewerbestaubsauger 12 mit einer für die Länge der Durchlassöffnung 4 ausreichenden Sauglanze 13, mit der insbesondere der distale Endbereich der Durchlassöffnung ausgesaugt werden kann.

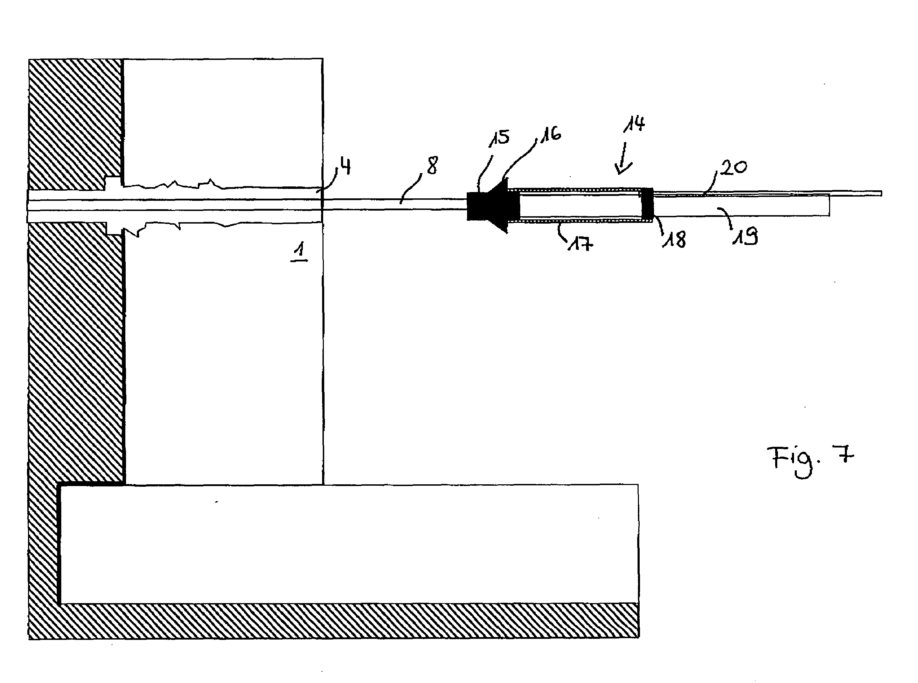

Figur 7 zeigt neben der Leitung 8 und der Durchlassöffnung 4 in der Kellerwand 1 eine auf die Leitung 8 aufgeschobene erfindungsgemäße Leitungsdurchführung, die insgesamt mit 14 beziffert ist. Diese Vorrichtung enthält einen Kopf 15 mit einer Dichtscheibe 16, einen sich daran anschließenden Mantel 17, die weiter rechts in einem Abschlussstück 18 mündet, ein zentrales Rohrstück 19, das das Abschlussstück 18, den Mantel 17 und den rechten Bereich des Rohrstücks 15 durchsetzt, und schließlich eine relativ schmale Befüllleitung 20, die das Abschlussstück 18 außerhalb des Rohrstücks 19 durchsetzt und in einen von dem Mantel 17 umgebenen Mantelraum führt.

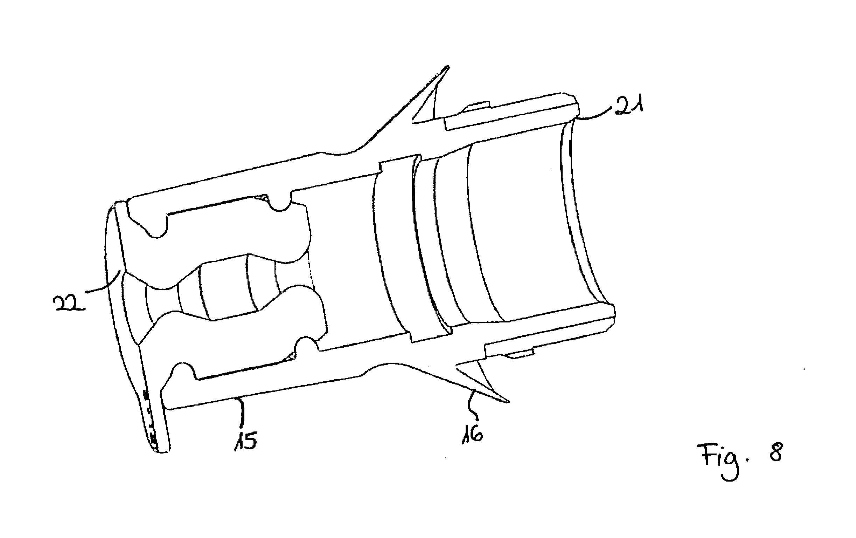

Der Kopf 15 mit der Dichtscheibe 16 ist in Figur 8 vergrößert und geschnitten dargestellt. Er besteht hier aus einem Rohrstück 21 mit einem sich von diesem im Schnitt konisch nach rechts und radial außen erstreckenden Gummiflansch als Dichtscheibe 16 und einem Elastomerdichteinsatz 22 im distalen Bereich innerhalb des Rohrstücks 21. Der Dichteinsatz 22 ist einfach austauschbar, um verschiedene Dimensionen von Leitungen 8 gut abdichten zu können.

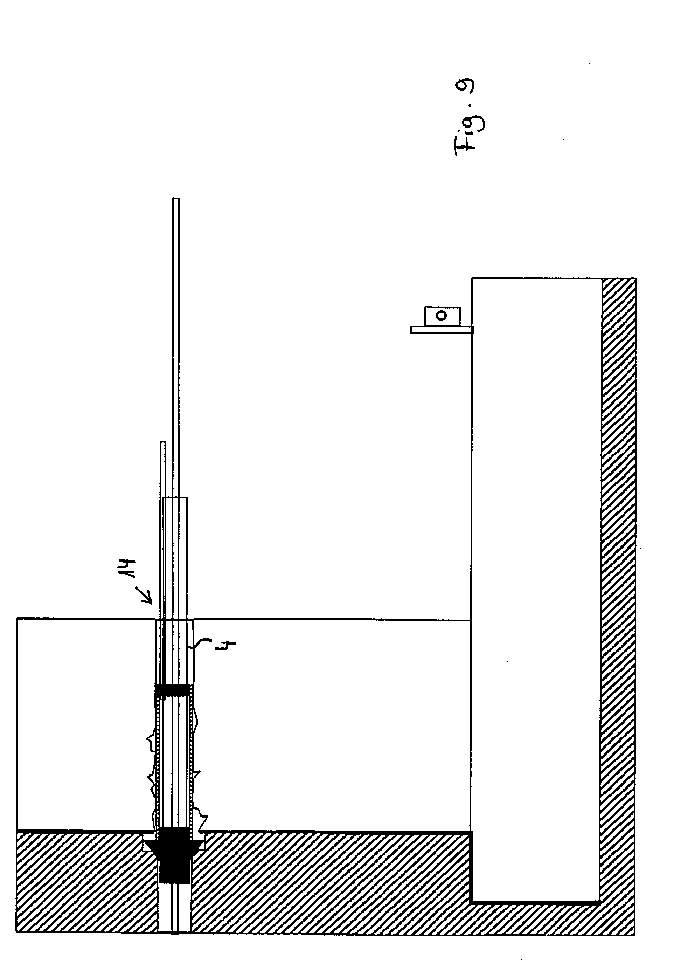

Figur 9 zeigt die erfindungsgemäße Leitungsdurchführung 14 in durch die Durchlassöffnung 4 durchgeschobenem Zustand. Dabei hat sich der Gummiflansch als Dichtscheibe 16 in seinem Außendurchmesser verringert, indem sich der Konuswinkel beim Durchschieben verkleinert hat. Damit konnte die Dichtscheibe durch die radial eigentlich zu schmale Durchlassöffnung 4 hindurchgelangen und sich hinter deren distaler Mündung, in der ein etwas vergrößerter Raum hergestellt worden ist, insbesondere durch die erwähnte Reinigung, wieder radial aufspannen. Hierzu dienen die elastomeren Rückstellkräfte des Gummiflansches 16.

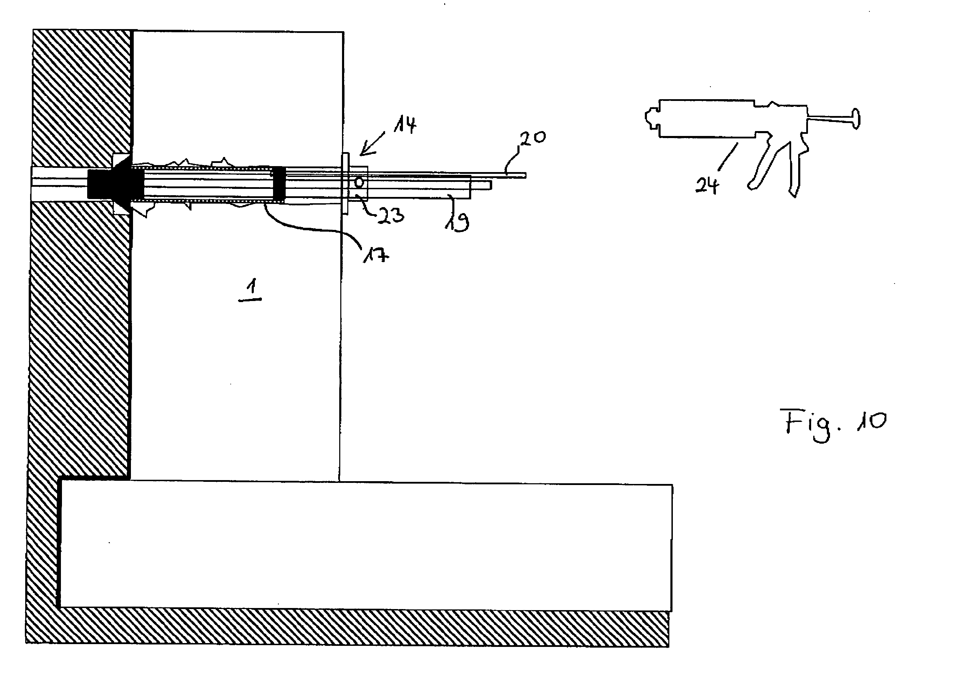

Figur 10 zeigt, wie die Leitungsdurchführung 14 in Leitungsrichtung etwas zurückgezogen wurde, was hier mit der Hand geschehen kann, um die Dichtscheibe 16 dichtende in Anlage an die Außenfläche der Gebäudewand 1 zu bringen. Dort wird sie fixiert, indem eine hier ganz einfache Spanneinrichtung in Form einer Klemmschelle 23 mit einer Klemmmadenschraube aufgesteckt und befestigt wurde. Diese Klemmschelle 23 liegt dann in Anlage an die proximale Außenfläche der Kellerwand 1.

In diesem provisorisch befestigten Zustand kann die symbolisch dargestellte PU-Schaum-Injektionspistole 24 mit Kartusche, die an sich konventionell ist, an die bereits erwähnte Befüllleitung 20 angeschlossen werden, um ein reaktionsfähiges PU-Schaumgemisch durch die Befüllleitung 20 in den Zwischenraum zwischen dem Rohrstück 19 und dem Mantel 17 einzubringen. Der eingebrachte PU-Schaum beginnt in der Durchführungshülse zu expandieren und füllt so das Volumen zwischen Mantel 17 und Rohrstück 19. Die weitere Expansion des PU-Schaums bewirkt einen Druckanstieg im Inneren der Durchführungshülse der zur einer Expansion der Mantels 17 führt, dessen Material ein Elastomer ist. Dadurch wird die Durchführungshülse im Inneren der Durchlassöffnung 2 an die Gebäudewand 3 gepresst und so in dieser befestigt. Der Mantel 17 ist ergänzend mit einer Perforation versehen. Diese Perforation ermöglicht den Austritt des PU-Schaums aus der Durchführungshülse ab einem Druckschwellenwert von 18 mbar. Der aus dem Mantel 17 austretende PU-Schaum bietet eine verbesserte Befestigung und Abdichtung der Leitungsdurchführung 14 in der Durchlassöffnung 4 durch den PU-Schaum zwischen Mantel 17 und Innenfläche der Durchlassöffnung 4. Dies ist insbesondere bei einer Durchlassöffnung 4 mit einer rauen oder mit Rissen durchzogenen Innenfläche, ebenso bei Hohlräumen innerhalb der Gebäudewand 1 vorteilhaft. Wenn der PU-Schaum aus der Pistole 24 erstarrt ist, kann die Pistole 24 abgenommen werden. Auch die Klemmschelle 23 kann abgenommen werden.

Die radiale Expansion der Durchführungshülse hat die Dichtscheibe 16 mit etwas verstärktem Druck an die Kellerwand 1 angezogen. Ferner kann der PU-Schaum bis zu der Dichtscheibe 16 vorgedrungen sein und deren dichtende Anlage an der Außenseite der Gebäudewand 1 erreicht haben. Hier sorgt der PU-Schaum nicht für eine zusätzliche Abdichtung sondern auch für eine besonders gute Befestigung der Dichtscheibe durch eine Klebewirkung nicht nur an dieser, sondern auch an der Gebäudewand 1, insbesondere an deren Schwarzanstrich.

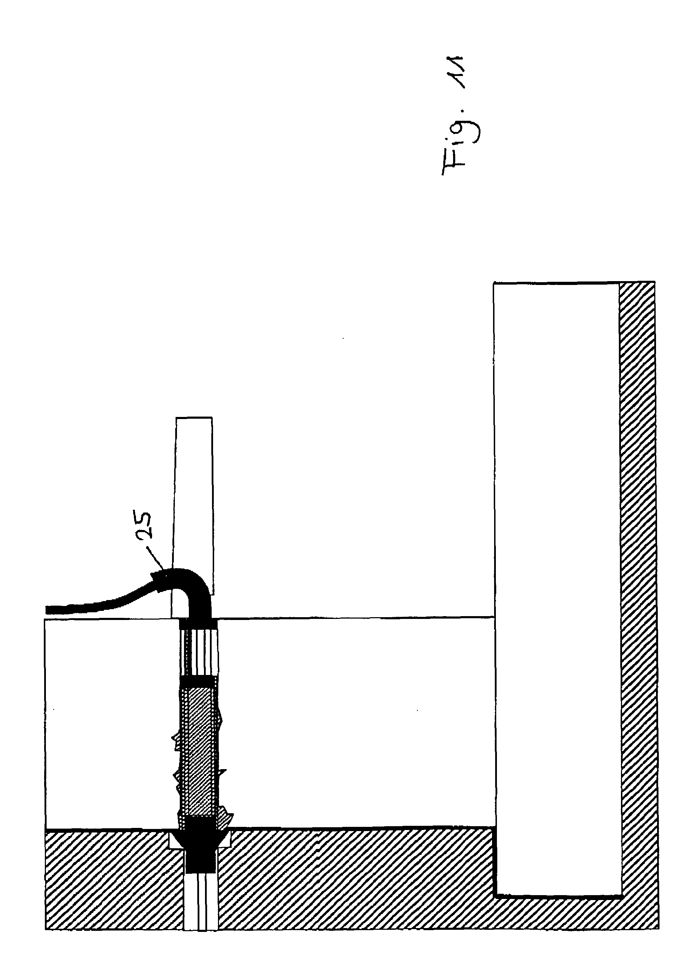

In dieser Situation kann gemäß Figur 11 ein sog. Rasterbogen 25 angebracht werden, nämlich eine Schutzkonstruktion aus starren Segmenten. Die Leitung 8 wird auf die richtige Länge zugeschnitten, umgelegt und angeschlossen.

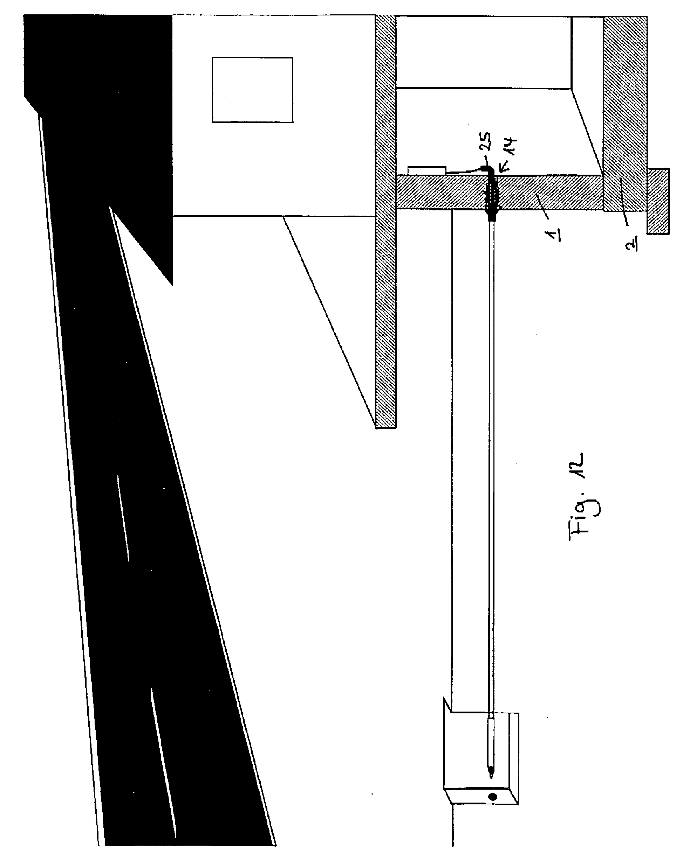

Damit ist gemäß Figur 12 in dem Keller der gewünschte Anschluss vorhanden, der über die Leitung 8 durch das Erdreich mit dem äußeren Anschluss verbunden ist.

Es sind auch Varianten denkbar, bei denen kein Rohrstück 19 zur Durchführung einer Leitung 8 eingebracht wird, sondern die Leitung 8 direkt der Füllsubstanz ausgesetzt wird. Ferner sind Varianten mit nicht perforiertem Mantel denkbar, dessen Expansion allein zur Befestigung ausreicht. Die durch die Expansion des Mantels 17 hervorgerufene zusätzliche Zugkraft an der Dichtscheibe 16 kann in manchen Fällen auch für die Herstellung einer ausreichenden dichtenden Anpressung genügen, wobei ganz auf eine Spanneinrichtung verzichtet wird. Umgekehrt kann auch mit einer Spanneinrichtung gearbeitet werden, die dauerhaft montiert bleibt und den nötigen Anpressdruck herstellt. Eine solche Spanneinrichtung kann beispielsweise ein das Rohrstück 19 fassender Flansch sein, der innerhalb des Kellers, also vor der proximalen Mündung der Durchlassöffnung 4 und diese überdeckend angebracht und beispielsweise über Schraubbolzen gegen die Kellerwand 1 verspannt wird.

## Patentansprüche

1. Leitungsdurchführung (14) für eine Gebäudewand (1) mit
einer Dichtscheibe (16), die zum Durchführen durch eine Durchlassöffnung (4) in der Gebäudewand (1) in ihren Außenmaßen senkrecht zur Durchführungsrichtung verringert werden kann und danach zur dichtenden Anlage an einer hinsichtlich des Durchführens distalen Seite der Gebäudewand (1) vergrößert werden kann,
und einer Einrichtung (19) zum Durchführen der Dichtscheibe durch die Durchlassöffnung in der Gebäudewand von einer proximalen zu einer distalen Seite,
wobei eine Durchführungshülse (15-18) vorgesehen ist, die einen Mantel (17) aufweist und dazu ausgelegt ist, die Leitung (8) zu umgeben, und proximal von der Dichtscheibe (16) und innerhalb der Durchlassöffnung (4) in der Gebäudewand (1) angeordnet zu werden,
**dadurch gekennzeichnet, dass** die Durchführungshülse (15-18) ferner dazu ausgelegt ist, durch Einfüllen einer fließfähigen und nach Einfüllen aushärtenden Füllsubstanz (24) in das Innere der Durchführungshülse (15-18) in der Durchlassöffnung (4) befestigt zu werden, und
der Mantel (17) aus einem Elastomermaterial besteht und dazu ausgelegt ist, von der Füllsubstanz (24) unter Druck gesetzt und **dadurch** expandiert zu werden und/oder
der Mantel (17) dazu ausgelegt ist, dass die Füllsubstanz (24) durch die Wand des Mantels (17) hindurch austritt.

2. Leitungsdurchführung (14) nach Anspruch 1, bei der die Dichtscheibe (16) zu einer Verringerung und Vergrößerung ihrer Außenmaße durch eine schirmartige Bewegung, d. h. eine Verringerung bzw. Vergrößerung eines Winkels zwischen der Dichtscheibe (16) und der Durchführungsrichtung, ausgelegt ist.

3. Leitungsdurchführung (14) nach Anspruch 2, bei der die Dichtscheibe (16) flächig ein formflexibles Material aufweist.

4. Leitungsdurchführung (14) nach einem der vorstehenden Ansprüche, bei der die Dichtscheibe (16) bei dem Verringern aer Außenmaße elastische Rückstellkräfte entwickelt, die zur Außenmaßverringerung überwunden werden können und zur Außenmaßvergrößerung dienen.

5. Leitungsdurchführung (14) nach einem der vorstehenden Ansprüche, bei der die Einrichtung (19) zum Durchführen der Dichtscheibe (16) ein Leitungsstück oder ein Kanalstück (19) für die Aufnahme eines Leitungsstücks (8) ist.

6. Leitungsdurchführung (14) nach Anspruch 5, bei der die Einrichtung zum Durchführen der Dichtscheibe das Kanalstück (19) zur Aufnahme des Leitungsstücks (8) ist und das Kanalstück (19) von der Dichtscheibe (16) umgeben wird und einen Dichteinsatz (22) zur Aufnahme des Leitungsstücks aufweist.

7. Leitungsdurchführung (14) nach einem der vorstehenden Ansprüche, bei der der Mantel (17) flexibel ist.

8. Leitungsdurchführung (14) nach einem der vorstehenden Ansprüche, bei der der Mantel (17) zum Austritt der fließfähigen Füllsubstanz perforiert ist.

9. Verfahren zum Befestigen einer Leitungsdurchführung (14) nach einem der vorstehenden Ansprüche in der Durchlassöffnung (4) durch die Gebäudewand (1), bei dem eine fließfähige und nach Einfüllen aushärtende Füllsubstanz (24) in das innere der Durchführungshülse (15-18) in der Durchlassöffnung (4) eingebracht wird und durch Aushärten die Leitungsdurchführung (14) in der Durchlassöffnung (4) befestigt, wobei
der Mantel (17) aus einem Elastomermaterial besteht und durch die eingefüllte Füllsubstanz (24) unter Druck gesetzt und **dadurch** expandiert wird und/oder
die eingefüllte Füllsubstanz (24) durch die Wand des Mantels (17) hindurch austritt.

10. Verfahren nach Anspruch 9, bei dem die Füllsubstanz (24) expandiert und im expandierten Zustand aushärtet.

11. Verfahren nach Anspruch 9 oder 10, insbesondere unter Verwendung einer Leitungsdurchführung (14) nach Anspruch 8, bei dem die fließfähige Füllsubstanz (24) ab einem Druckschwellenwert zwischen 5 mbar und 50 mbar aus einem Mantel (17) der Durchführungshülse (15-18) austritt.

12. Verfahren nach Anspruch 10 oder 11, bei dem sich die Durchführungshülse (15-18) bei der Expansion der Füllsubstanz (24) in Durchführungsrichtung zusammenzieht und dabei die Dichtscheibe (16) auf die distale Seite der Gebäudewand (1) zieht.

13. Verfahren nach einem der Ansprüche 9 bis 12, auch in Verbindung mit einem der Ansprüche 10- 12, bei dem die fließfähige Füllsubstanz (24) auf der distalen Seite der Durchlassöffnung (4) durch die Gebäudewand (1) aus der Durchlassöffnung (4) etwas austritt und durch die Dichtscheibe (16) auf der distalen Seite der Gebäudewand (1) über die Außenabmessungen der Durchlassöffnung (4) hinaus geführt wird und dort die Dichtwirkung der Dichtscheibe (16) und/oder die Verbindung zwischen der Dichtscheibe (16) und der Gebäudewand (1) verbessert.

14. Verfahren nach einem der Ansprüche 9-13, bei dem durch die Durchlassöffnung (4) in der Gebäudewand (1) hindurch eine Erdrakete (4) geführt wird und auf der distalen Seite der Gebäudewand (1) einen Kanal (7) für die durchzuführende Leitung (8) gräbt und die Leitungsdurchführung (14) danach in die Durchlassöffnung (4) in der Gebäudewand (1) eingebracht wird.

15. Verwendung einer Leitungsdurchführung (14) nach einem der Ansprüche 1 - 8 zur Befestigung in einer Durchlassöffnung (4) in einer Gebäudewand (1) gemäß einem Verfahren nach einem der Ansprüche 9-14.

## Claims

1. A conduit duct (14) for a building wall (1) comprising
a sealing disc (16), the exterior dimensions of which can be decreased perpendicular to the duct direction for being led through a through-opening (4) in said building wall (1) and which can thereafter be increased for a sealing contact with a side of said building wall (1), which is distal in terms of said leading-through,
and a device (19) for leading said sealing disc through said through-opening in said building wall from a proximal to a distal side,
wherein a leadthrough sleeve (15-18) is provided, which comprises a jacket (17) and which is designed to surround the conduit (8) and to be arranged in said building wall (1) proximally from said sealing disc (16) and within said through-opening (4),
**characterized in that** said leadthrough sleeve (15-18) is further designed to be fixed in said through-opening (4) by filling a filler substance (24), which is free-flowing and which hardens after filling, into the interior of said leadthrough sleeve (15-18), and
said jacket (17) consists of an elastomer material and is designed to be pressurized by the filler substance (24) and to thus be expanded and/or
said jacket (17) is designed for said filler substance (24) to escape through the wall of said jacket (17).

2. The conduit duct (14) according to claim 1, wherein said sealing disc (16) is designed for a decrease and increase of its exterior dimensions by means of an umbrella-like movement, that is a decrease or increase, respectively, of an angle between said sealing disc (16) and said duct direction.

3. The conduit duct (14) according to claim 2, wherein said sealing disc (16) comprises, in terms of an area thereof, a material, which has a flexible shape.

4. The conduit duct (14) according to one of the preceding claims, wherein said sealing disc (16) develops elastic reset forces, which can be overcome for said exterior dimension decrease and which serve for said exterior dimension increase, in response to said decrease of said exterior dimensions.

5. The conduit duct (14) according to one of the preceding claims, wherein said device (19) for leading said sealing disc (16) through is a conduit portion or a channel portion (19) for accommodating a conduit portion (8).

6. The conduit duct (14) according to claim 5, wherein said device for leading said sealing disc through is said channel portion (19) for accommodating said conduit portion (8) and said channel portion (19) is surrounded by said sealing disc (16) and comprises a sealing insert (22) for accommodating said conduit portion.

7. The conduit duct (14) according to one of the preceding claims, wherein said jacket (17) is flexible.

8. The conduit duct (14) according to one of the preceding claims, wherein said jacket (17) is perforated for the escape of said free-flowing filler substance.

9. A method for fixing a conduit duct (14) according to one of the preceding claims in said passage opening (4) through said structure wall (1), wherein a filler substance (24), which is free-flowing and which hardens after said filling, is introduced into said interior of said leadthrough sleeve (15-18) in said through-opening (4) and is fixed in said through-opening (4) by said hardening of said conduit duct (14), wherein
said jacket (17) consists of an elastomer material and is pressurized by means of said filler substance (24), which is filled in, and is expanded thereby and/or
said filler substance (24), which is filled in, escapes through said wall of said jacket (17).

10. The method according to claim 9, wherein said filler substance (24) expands and hardens in the expanded state.

11. The method according to claim 9 or 10, in particular using a conduit duct (14) according to claim 8, wherein said free-flowing filler substance (24) escapes from a jacket (17) of said leadthrough sleeve (15-18), starting at a pressure threshold value of between 5 mbar and 50 mbar.

12. The method according to claim 10 or 11, wherein said leadthrough sleeve (15-18) contracts in response to said expansion of said filler substance (24) in said leadthrough direction and thereby pulls said sealing disc (16) onto the distal side of said building wall (1).

13. The method according to one of claims 9 to 12, also in connection with one of claims 10-12, wherein said free-flowing filler substance (24) escapes slightly from said through-opening (4) through said building wall (1) on the distal side of said passage opening (4) and is guided out through said sealing disc (16) on said distal side of said building wall (1) in excess of said exterior dimensions of said through-opening (4) and improves the sealing effect of said sealing disc (16) and/or the connection between said sealing disc (16) and said building wall (1) at that location.

14. The method according to one of claims 9-13, wherein a displacement mole (4) is guided through said through-opening (4) in said building wall (1) and digs a channel (7) for said conduit (8), which is to be guided through, on the distal side of said building wall (1) and said conduit duct (14) is thereafter introduced into said through-opening (4) in said building wall (1).

15. A use of a conduit duct (14) according to one of claims 1-8 for fixing in a through-opening (4) in a building wall (1) according to a method according to one of claims 9-14.

## Revendications

1. Passage de conduit (14) pour un mur de bâtiment (1), avec
- un disque d'étanchéité (16) qui, pour le passage à travers une ouverture de passage (4) dans le mur de bâtiment (1), peut être réduit dans ses dimensions, perpendiculairement à la direction de passage, et peut ensuite être agrandi pour une application étanche sur un côté du mur de bâtiment (1) distal par rapport au passage,
- et un dispositif (19) pour le passage du disque d'étanchéité à travers la ouverture de passage dans le mur de bâtiment, d'un côté proximal vers un côté distal,
- dans lequel il est prévu un manchon de passage (15-18) comportant une enveloppe (17), tout en étant conçu pour entourer le conduit (8) et pour être disposé de façon proximale par rapport au disque d'étanchéité (16) et à l'intérieur de l'ouverture de passage (4) dans le mur de bâtiment (1),
**caractérisé en ce que**
- le manchon de passage (15-18) est en outre conçu pour être fixé dans l'ouverture de passage (4), par remplissage d'une substance de remplissage (24) capable de s'écouler et durcissant après le remplissage, à l'intérieur du manchon de passage (15-18), et
- l'enveloppe (17) est constituée d'une matière élastomère et conçue pour être mise sous pression par la substance de remplissage (24) et ainsi expansée, et/ou
- l'enveloppe (17) est conçue de manière à ce que la substance de remplissage (24) sorte à travers la paroi de l'enveloppe (17).

2. Passage de conduit (14) selon la revendication 1, dans lequel le disque d'étanchéité (16) est conçu pour une réduction et un agrandissement de ses dimensions, par un mouvement du genre parapluie, c'est-à-dire une réduction ou un agrandissement d'un angle entre le disque d'étanchéité (16) et la direction de passage.

3. Passage de conduit (14) selon la revendication 2, dans lequel le disque d'étanchéité (16) comporte, dans une aire, un matériau souple dans sa forme.

4. Passage de conduit (14) selon l'une des revendications précédentes, dans lequel, lors de la réduction de ses dimensions, le disque d'étanchéité (16) développe des forces de rappel élastiques aptes à être surmontées pour la réduction des dimensions et servant à l'agrandissement des dimensions.

5. Passage de conduit (14) selon l'une des revendications précédentes, dans lequel le dispositif (19) pour le passage du disque d'étanchéité (16) est une pièce de conduit ou une pièce de canal (19) pour l'admission d'une pièce de conduit (8).

6. Passage de conduit (14) selon la revendication 5, dans lequel le dispositif pour le passage du disque d'étanchéité constitue la pièce de canal (19) pour l'admission de la pièce de conduit (8), et la pièce de canal (19) est entourée par le disque d'étanchéité et comporte une pièce d'étanchéité (22) pour l'admission de la pièce de conduit.

7. Passage de conduit (14) selon l'une des revendications précédentes, dans lequel l'enveloppe (17) est souple.

8. Passage de conduit (14) selon l'une des revendications précédentes, dans lequel l'enveloppe (17) est perforée pour l'évacuation de la substance de remplissage apte à s'écouler.

9. Procédé pour la fixation d'un passage de conduit (14) selon l'une des revendications précédentes dans l'ouverture de passage (4) à travers un mur de bâtiment (1), dans lequel une substance de remplissage (24) apte à s'écouler et durcissant après le remplissage à l'intérieur du manchon de passage (15-18) est introduite dans l'ouverture de passage (4) et fixe le passage de conduit (14) dans l'ouverture de passage (4) par durcissement, dans lequel
- l'enveloppe (17) est constituée d'une matière élastomère et mise sous pression par la substance de remplissage (24) préalablement introduite, tout en étant ainsi expansée, et/ou
- la substance de remplissage (24) préalablement introduite est évacuée par la paroi de l'enveloppe (17)

10. Procédé selon la revendication 9, dans lequel la substance de remplissage (24) est expansée et durcit dans l'état expansé.

11. Procédé selon la revendication 9 ou 10, utilisant en particulier un passage de conduit (14) selon la revendication 8, dans lequel la substance de remplissage (24) apte à s'écouler est évacuée à partir d'une valeur seuil de pression comprise entre 5 mbar et 50 mbar, par une enveloppe (17) du manchon de passage (15-18).

12. Procédé selon la revendication 10 ou 11, dans lequel, lors de l'expansion de la substance de remplissage (24), le manchon de passage (15-18) se contracte dans la direction de passage et tire ainsi le disque d'étanchéité (16) du côté distal du mur de bâtiment (1).

13. Procédé selon l'une des revendications 9 à 12, également en association avec l'une des revendications 10-12, dans lequel la substance de remplissage (24) apte à s'écouler déborde quelque peu par l'ouverture de passage (4) du côté distal de l'ouverture de passage (4), à travers le mur de bâtiment (1), et guidée vers l'extérieur à travers le disque d'étanchéité (16) du côté distal du mur de bâtiment (1), par les dimensions extérieures de l'ouverture de passage (4), où elle améliore l'action d'étanchéité du disque d'étanchéité (16) et/ou la liaison entre le disque d'étanchéité (16) et le mur de bâtiment (1).

14. Procédé selon l'une des revendications 9 à 13, dans lequel un dispositif de forage au sol (4) est guidé à travers l'ouverture de passage (4) dans le mur de bâtiment (1), et creuse un canal (7) du côté distal du mur de bâtiment (1), pour le conduit (8) à faire passer, et le passage de conduit (14) est ensuite introduit dans l'ouverture de passage (4) dans le mur de bâtiment (1).

15. Utilisation d'un passage de conduit (14) selon l'une des revendications 1 à 8, pour la fixation dans une ouverture de passage (4) dans un mur de bâtiment (1), conformément à un procédé selon l'une des revendications 9 à 14.
